# EUROPEAN PATENT SPECIFICATION

(11) **EP 3 484 331 B1**
(45) Date of publication and mention of the grant of the patent: **04.05.2022**
(21) Application number: 17749531.4
(22) Date of filing: 11.07.2017
(51) Int. Cl.: A47J 37/06

(54) **FOOD COOKING DEVICE TO COOK WITH GRILL**
LEBENSMITTELKOCHVORRICHTUNG ZUM KOCHEN MIT GRILL
DISPOSITIF DE CUISSON D'ALIMENTS POUR CUISSON AVEC GRIL

(30) Priority: 14.07.2016 IT 201600073753
(43) Date of publication of application: 22.05.2019
(73) Proprietor: LACALOM S.R.L., 42020 San Polo D'Enza (RE) (IT)
(72) Inventor: FONTANESI, Daniel, 42123 Reggio Emilia (RE) (IT)
(74) Representative: Fanzini, Valeriano
(86) International application number: PCT/IB2017/054183
(87) International publication number: WO 2018/011716

(56) References cited:
- EP-A1- 0 896 809
- WO-A1-2010/002203
- FR-A1- 2 763 824
- US-A- 5 653 159

## Description

### FIELD OF APPLICATION OF THE INVENTION

Forming the object of the present finding is a cooking device for grill cooking on gas burner, normally also simply known as "grill".

Devices are also known for grill cooking that are fixed or portable, called "barbecues".

The grill is an instrument used for cooking meat and fish in particular, but also several types of vegetables. The food to be cooked is spread on top of the grill itself.

This commonly consists of a steel grating, constituted by horizontal bars that intersect with the vertical bars. It can be rectangular, square or even circular.

In accordance with the heating method, the grill cooking can be of the type:
- via irradiation, or indirect, where the cooking is mainly carried out due to the infrared radiation (heat) emitted by the fuel, more indirectly through the smoke and hot air. The charcoal or embers are arranged at a certain distance from the grill,
- via contact, or direct, where plates of various type are used (for example, made of stone) or grills, red-hot, that are electrically heated or heated by combustion of the charcoal/wood.

Document US-A-5653159 discloses a device of the state of the art.

### SUMMARY OF THE INVENTION

The devices currently on the market have drawbacks; in particular, annoying and considerable smoke fumes are encountered, due to the combustion of the fat substances that fall on the underlying embers. There is also the probable cancerogenic effect that can arise from the ingestion of foods that have absorbed such fumes.

A further drawback of the currently-used devices is that these only serve well, usually, for cooking in an open environment, or alternatively in closed places that are arranged *ad hoc* for the necessary equipment, such as a particular chimney or oven.

One object of the invention is to provide a cooking device for grill cooking which allows overcoming the drawbacks lamented above with reference to the abovementioned prior art.

There is the need to be able to provide a cooking device useable both for restaurant and for "home" use, i.e. adaptable and useable both in the kitchen of a commercial setting used as a restaurant and in a normal home kitchen, for example preferably using one of the gas burners already present onsite.

Therefore, one object of the present invention is to provide the technician with an improved device for cooking foods, in particular according to the cooking technique on grill, in the scope of a rational simple solution and with rather limited cost.

These and other objects are attained due to the characteristics of the invention reported in the independent claims. The dependent claims delineate preferred and/or particularly advantageous aspects of the invention.

According to one aspect of the invention, a cooking device is provided according to independent claim 1.

The heat flows into the connector which first diffuses the heat within a closed volume and then subsequently upward, into a position where at least one preferably removable grid or grill is present.

One places what one wishes to cook on the grid or grill (e.g. meat, vegetables, etc).

Due to such solution, that which potentially drips through the grid or grill during the cooking step does not finish directly on the "live/turned-on" source of heat ma but only on the base.

According to another aspect of the invention, a method is supplied for grill cooking according to claim 14.

Due to such solution, one prevents the possible fat or other drained item derived from cooking from attaching to the surface, thus preventing the formation of smoke that is usually generated when the fat drains on the flame or live heat surface.

Due to this solution, it is possible to maximize the use of the heat coming from the external source.

Preferably, the device is non-hermetically closable by at least one dome-shaped lid with base corresponding with the edge of the structure of the grill body; due to such solution, the lid facilitates the cooking by improving the heat yield and heat seal.

In general, due to the invention it is thus possible to grill like a barbecue within a closed space, such as a kitchen, by making use of the (home) burners.

Preferably, the device is provided with lateral handles on the supporting structure, as well as with a handle on the lid; these expedients assist the movement and positioning of the grill.

Preferably, the cooking device, object of the invention, is made of steel, includes handles and lid.

Said objects and advantages are all attained by the cooking device, object of the present finding, which is characterized for that provided in the below-reported claims.

### BRIEF DESCRIPTION OF THE FIGURES

The characteristics of the invention will be more evident from the following description of some embodiments illustrated, merely by way of non-limiting example, in the enclosed drawing table.

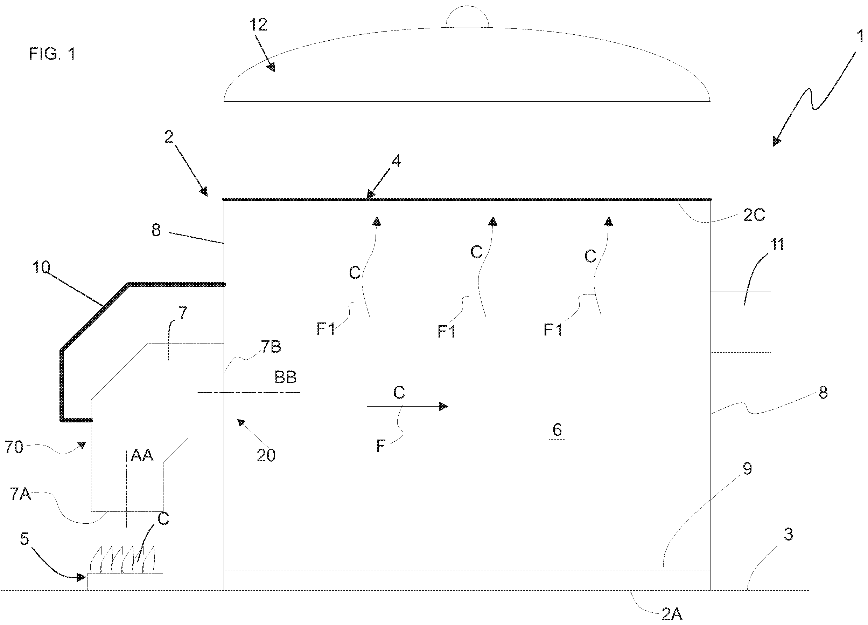

- Figure 1: illustrates a middle section of the device according to the invention.

### DESCRIPTION OF THE INVENTION

With particular reference to the figure, reference number 1 overall indicates the cooking device for cooking foods with grill, object of the invention.

The cooking device 1 is substantially achieved with a quadrangular structure 2 which is vertically extended and which can be set on any one flat surface 3, such as kitchen cooking surfaces or even kitchen burners, or work surfaces.

In other versions of the device of the invention, a supporting structure 2 can be provided with circular plan or other shapes.

The structure 2 is internally hollow.

The structure 2 comprises a bottom wall 2A and one or more lateral walls 8 which are extended from the bottom wall 2A up to an upper edge 2C of the structure 2 and which define an inner volume 6 of the structure 2.

The structure 2 is therefore removable. Preferably the structure 2 is rigid.

The cooking device 1 also comprises a grill 4 removably constrained to the structure 2.

In accordance with a preferred embodiment, the edge or support of a grill element, more generally a grill 4, can be arranged directly on the upper edge 2C of said structure 2.

Alternatively, in other versions, on the lateral walls 8 which circumscribe the structure 2, inside or outside, coupling means can also be present through which the abovementioned food cooking grill 4 is supported.

On a side wall 8 of the structure 2, an opening 20 is provided intended to allow the entrance of heat within the structure 2, as better explained hereinbelow.

The opening 20 is provided on the side wall 8 in an intermediate vertical position between the bottom wall 2A and the upper edge 2C.

During use, the cooking device 1 is positioned close to a heat source 5 and arranged such that the opening 20 is directed towards the heat source 5, in a manner such that the heat emanated by the heat source 5 reaches the opening 20.

The heat "C" enters within the inner volume 6 of the structure 2 and rises upward within the same, i.e. towards the upper edge 2C and the grill 4, heating and cooking the food present on the grill, as better explained hereinbelow. The device is arranged alongside the heat source, hence the flame does not directly hit the food present on the grill, preventing the carbonization thereof.

Such arrangement, in addition, together with the provision of a closed bottom wall, allows preventing cooking liquids or fats from reaching the heat source.

Therefore, foul odors or potentially toxic gases are not released during cooking with the cooking device of the invention.

At the same time, the shape of the supporting structure 2 allows effectively conveying the heat generated by the heat source 5 towards the grill 4 and hence towards the food.

The invention is actuated by arranging the structure 2 such that it is configured for
a. receiving the heat C emanated by an external source 5,
b. diffusing said heat collected within said structure 2, i.e. an inner volume 6 thereof, and
c. conveying said heat upward and through said grill 4, before exiting at the top.

The heat is intercepted from a lateral position.

The arrangement of the opening 20 in a side wall 8 of the structure 2 ensures that the heat "C" enters within the structure with a flow direction indicated with the arrow "F" substantially parallel to the grill 4.

The heat "C" entering into the structure 2 does not have flow directed directly towards the grill 4.

Therefore the heat "C" is diffused within the inner volume of the structure and progressively rises towards the grill 4, as indicated by the arrow F1 in the Figure.

This allows uniformly heating the food present on the grill, preventing the formation of grill zones that are heated much more than other zones.

A uniform heating of the foods on the grill 4 is therefore obtained.

In the shown version, the cooking device 1 also comprises a connector element 7 inserted on the opening 20 and arranged for conveying the heat generated by the heat source 5 within the structure 2.

More precisely, the action of receiving and diffusing the heat is intercepted by at least one connector element 7 connectable to a side wall or side 8 of said structure 2.

Naturally, the structure 2 bears passage opening 20 corresponding, in the connection zone, with the connector element 7.

The presence of the connector element 7 allows conveying, in a particularly efficient manner, the heat generated by the heat source 5 within the structure 2.

The connector element 7 can be connected to the structure 2 in a fixed or removable manner.

The connector element 7 is sealingly connected to the structure 2 such that there are no heat losses "C".

The connector element 7 can for example be welded to the structure 2, or it is provided with quick coupling means of known type.

In each case, once the connector element 7 is connected, there must be the assurance that there are no heat losses C in the zone of junction between the connector element 7 and the structure 2.

The connector element 7 comprises an internally hollow tubular body 70 delimited by two opposite mouths 7A and 7B.

The tubular body 70 of the connector element 7 is elbow-shaped such that the two opposite mouths 7A, 7B are arranged on planes incident with respect to each other.

In other words, the axes passing through the two opposite mouths 7A, 7B are incident with respect to each other.

In the shown version, the tubular body 70 is shaped such that the two opposite mouths 7A, 7B are arranged on planes perpendicular to each other and, consequently, such that the axes passing through the two opposite mouths 7A, 7B are perpendicular to each other.

Once connected with the structure 2, the connector element 7 comprises an inlet mouth 7A directed downward and with axis AA substantially vertical and an outlet mouth 7B directed towards the opening 20 and with axis BB substantially orthogonal to the axis AA.

In the embodiment, the connector 7 provides a 90° curve with respect to the intercepted source, passing from an inlet that is substantially vertical according to the axis AA to an outlet within the structure 2 that is substantially perpendicular, according to the axis BB.

The presence of the connector element 7 allows further optimizing the uniformity of the cooking obtainable with the device 1 of the invention. Due to such solution, the flow of heat C conveyed inside the structure 2 is not directly directed towards the grill 4 (but rather is directed parallel thereto), but rather it must undergo an expansion within the volume 6 of the structure 2 before rising towards the grill 4 itself.

In each case, one observes that below the grill 4, the heat source, such as that of the source 5, preferably a gas burner of a kitchen, is not directly present; it is thus arranged laterally.

Conveniently, the removable structure 2 also comprises a tank 9 for collecting the drain fat during cooking, provided on the bottom wall 2A.

Preferably said tank 9 is situated in lower position with respect to the opening 20 and, hence, with respect to the connection of the connector element 7 with the structure 2.

The tank 9 is filled with water before cooking.

In a preferred embodiment, the collection tank 9 is removable from the structure 2 and positionable on the bottom of the structure 2.

This signifies that once the cooking has terminated, the tank 9 can be extracted from the structure 2 and washed, for example in a dishwasher, in any case separately from the structure 2 itself and from the grill 4, also removable.

The device 1, as illustrated, is equipped with at least two handles 10 and 11.

According to a preferred embodiment of the invention, the handles 10 and 11 are placed on opposite lateral walls 8, or on opposite sides of the structure 2. In particular at least one handle 10 or 11 is arranged on the same side 8 where the connector element 7 is situated.

According to the preferred embodiment indicated in the example, the handle 10 - that positioned on the side of the connector element 7 - is shaped as a handle so as to be connected respectively to the connector 7 itself, on one side, and against the side wall 8 of the structure 2, on the other side.

In such a manner, the handle 10 is arranged as the connector 7 once it is connected to the device (axis BB direction).

The other handle, the opposite one 11, is instead preferably arranged perpendicular for a grip directed in the other sense.

Due to said configuration of the handle as indicated, it is possible to govern and also position the device 1 in an optimal manner, both during the initial step and also possibly in cooking, if necessary.

Still with reference to the figure, it is observed that the device 1 is non-hermetically closable by at least one lid 12. The dome-shaped lid 12 has base that is rectangular, or corresponding with the plan shape of the structure 2, i.e. such that it can coincide with the shape of the structure 2, simultaneously containing the grill 4 at its interior.

In addition to the device, it is also desired to claim the method for grill cooking actuatable with the above-described device, i.e. it is claimed to cook by positioning, at the side of at least one gas burner, the device 1 and exploiting the heat source 5 emitted by the burner in order to direct a heat source in an indirect direction onto the grill 4 and indirectly cook the foods.

In particular, the cooking by means of the cooking device 1, complete with grill 4 and collection tank 9, provides for positioning said device 1 in a manner such that the connector element 7 has the inlet mouth 7A above the heat source 5.

The food to be heated or cooked is spread on the grill 4 and the tank 9 is filled with water before cooking.

The turned-on source 5 transmits the heat "C", which enters into the structure 2 and rises upward inside the same, i.e. towards the grill 4, heating and cooking the food present on the grill.

The flame of the source 5 does not directly hit the food present on the grill, preventing the carbonization thereof and also preventing cooking liquids or fats from reaching the heat source. Therefore, foul odors or potentially toxic gases are not released during cooking.

The cooking liquids or fats are in fact collected in the collection tank 9, for the subsequent elimination thereof.

Indeed, once the cooking is terminated, the tank 9 is extracted from the structure 2, and washed separately from the structure 2 itself and from the grill 4, also removable.

## Claims

1. Device (1) for cooking foods with grill (4), comprising a grill (4), a removable structure (2) supporting said grill (4), said structure (2) comprises a bottom wall (2A) and at least one side wall (8) defining an inner volume (6) of said structure (2) and wherein an opening (20) is defined on said at least one side wall (8) in order to allow the entrance of heat in said structure (2), said heat being emanated by an external heat source (5) to the device (1) and the device comprises a connector element (7) between the external heat source (5) and the opening (20) wherein said connector element (7) is internally hollow and comprises an inlet mouth (7A) directable towards the external source (5) and an outlet mouth (7B) inserted in the opening (20).

2. Cooking device (1) according to the preceding claim wherein said side wall (8) is extended from said bottom wall (2A) to a free edge (2C) at which said grill (4) is provided.

3. Cooking device (1) according to claims 1 and 2 wherein said opening (20) is defined on said side wall (8) in an intermediate vertical position between said bottom wall (2A) and the grill (4).

4. Cooking device (1) according to claim 1 wherein the connector element (7) is shaped curved, such that the mouths (7A, 7B) are arranged on planes incident to each other.

5. Cooking device (1) according to claim 1 wherein the connector element (7) forms a 90° curve in a manner such that the mouths (7A, 7B) are arranged on planes perpendicular to each other.

6. Cooking device (1) according to claim 1 which further comprise a tank (9) for collecting the drain fat, removably positionable on the bottom wall (2A) in lower position with respect to the opening (20).

7. Cooking device (1) according to claim 1 wherein the structure (2) is configured for:
a. receiving, from the lateral position of said structure (2), the heat (C) emanated by the external source (5),
b. diffusing said heat (C) collected within said structure (2), i.e. in an inner volume (6) thereof, and
c. conveying said heat (C) upward and through said grill (4), before exiting at the top.

8. Device (1) according to claim 7, **characterized in that** the action of receiving and diffusing the heat (C) is intercepted by at least one connector element (7) connectable to a side (8) of said structure (2); said connector element (7), once connected with the structure (2), bears an inlet mouth directed downward and with substantially vertical axis (AA) while the inlet into the structure (2) is according to an axis (BB) substantially arranged like the grill (4).

9. Device (1) according to claims 7 and 8, **characterized in that** said removable structure (2) comprises a tank (9) for collecting the drain fat during cooking; said tank (9) being situated in a lower position with respect to the connection of the connector element (7) with the structure (2).

10. Device (1) according to claim 9, **characterized in that** said collection tank (9) is removable and positionable on the bottom of the structure (2).

11. Device (1) according to claim 1, **characterized in that** comprises at least two handles (10, 11), placed on opposite sides; at least one handle (10, 11) is arranged on the same side where the connector element (7) is situated.

12. Device (1) according to claim 11, **characterized in that** the handle (10) of the side of the connector element (7) is respectively connectable to the connector element (7) itself, on one side, and against the side wall of the structure (2), on the other side; it is thus arranged along the axis BB of the connector element (7)

13. Device (1) according to one of the preceding claims, **characterized in that** it is non-hermetically closable by at least one dome-shaped lid (12) and with base coincident with the shape of the structure (2), simultaneously containing the grill (4) therein.

14. Method for grill cooking with a device according to claim 1, wherein provision is made for positioning said device (1) on the side of at least one gas burner and using the heat source emanated thereby for indirectly cooking the foods placed on its grill (4).

## Patentansprüche

1. Vorrichtung (1) zum Garen von Speisen mit einem Grill (4), umfassend einen Grill (4), eine abnehmbare Struktur (2), die den Grill (4) trägt, wobei die Struktur (2) eine Bodenwand (2A) umfasst und mindestens eine Seitenwand (8) ein Innenvolumen (6) der Struktur (2) definiert und wobei eine Öffnung (20) an mindestens einer Seitenwand (8) definiert ist, um den Wärmeeintrag in die Struktur (2) zu ermöglichen, wobei die Wärme wird von einer externen Wärmequelle (5) an die Vorrichtung (1) abgegeben und die Vorrichtung ein Verbindungselement (7) zwischen der externen Wärmequelle (5) und der Öffnung (20) umfasst, wobei das Verbindungselement (7) innen hohl ist und eine Eingangsmündung (7A) aufweist, die zur externen Quelle (5) adressierbar ist und eine in die Öffnung (20) eingesetzte Ausgangsmündung (7B) umfasst.

2. Garvorrichtung (1) nach dem vorhergehenden Anspruch, bei dem sich die Seitenwand (8) von der Bodenwand (2A) zu einem freien Rand (2C) erstreckt, in dem der Grill (4) angeordnet ist.

3. Garvorrichtung (1) nach Anspruch 1 und 2, bei dem die Öffnung (20) an der Seitenwand (8) in einer vertikalen Zwischenposition zwischen der Bodenwand (2A) und dem Grill (4) definiert ist.

4. Garvorrichtung (1) nach Anspruch 1, bei dem das Verbindungselement (7) eine gekrümmte Gestalt hat, derart, dass die Mündungen (7A, 7B) auf einander einfallenden Ebenen angeordnet sind.

5. Garvorrichtung (1) nach Anspruch 1, bei dem das Verbindungselement (7) eine 90°-Kurve bildet, wobei die Mündungen (7A, 7B) auf zueinander senkrechten Ebenen angeordnet sind.

6. Garvorrichtung (1) nach Anspruch 1, das ferner einen Tank (9) zum Sammeln des ausgetragenen Fetts aufweist, das entfernbar an der Rückwand (2A) in einer niedrigeren Position als die Öffnung (20) positioniert sein kann.

7. Garvorrichtung (1) nach Anspruch 1, bei dem die Struktur (2) konfiguriert ist um:
a. von der seitlichen Position der Struktur (2) die von der externen Quelle (5) abgegebene Wärme (C) zu empfangen,
b. die gesammelte Wärme (C) innerhalb der Struktur (2), d. h. in einem Innenvolumen (6) derselben, zu diffundieren, und
c. die Wärme (C) nach oben und durch den Grill (4) zu fördern, bevor Sie die Oberseite verlässt.

8. Vorrichtung (1) nach Anspruch 7, **dadurch gekennzeichnet, dass** der Vorgang des Aufnehmens und Abgebens der Wärme (C) durch mindestens ein mit einer Seite (8) der Struktur (2) verbindbares Verbindungselement (7) unterbunden ist; wobei das Verbindungselement (7), sobald es mit der Struktur (2) verbunden ist, trägt eine Eingangsmündung, die nach unten und mit einer im Wesentlichen vertikalen Achse (AA) eingerichtet ist, während der Eingang in die Struktur (2) einer Achse (BB) entspricht, die im Wesentlichen gleich dem Grill (4) angeordnet ist.

9. Vorrichtung (1) nach den Ansprüchen 7 und 8, **dadurch gekennzeichnet, dass** die abnehmbare Struktur (2) einen Tank (9) zum Aufnehmen des während des Kochens abgegebenen Fetts umfasst; wobei der Tank (9) in Bezug auf die Verbindung des Verbindungselements (7) mit der Struktur (2) in einer niedrigeren Position angeordnet ist.

10. Vorrichtung (1) nach Anspruch 9, **dadurch gekennzeichnet, dass** der Sammelbehälter (9) abnehmbar und auf dem Boden der Struktur (2) positionierbar ist.

11. Vorrichtung (1) nach Anspruch 1, **dadurch gekennzeichnet, dass** sie mindestens zwei Handgriffe (10, 11) umfasst, die an gegenüberliegenden Seiten angeordnet sind; wobei mindestens ein Handgriff (10, 11) auf der gleichen Seite wie das Verbindungselement (7) angeordnet ist.

12. Vorrichtung (1) nach Anspruch 11, **dadurch gekennzeichnet, dass** der Handgriff (10) der Seite des Verbindungselements (7) jeweils mit dem Verbindungselement (7) selbst auf einer Seite und gegen die Seitenwand der Struktur (2) auf der anderen Seite, verbindbar ist ; wobei er ist daher entlang der Achse BB des Verbindungselements (7) angeordnet.

13. Vorrichtung (1) nach einem der vorhergehenden Ansprüche, **dadurch gekennzeichnet, dass** sie mittels wenigstens eines kuppelförmigen Deckels (12) und mit einem mit der Form der Struktur (2) übereinstimmenden Boden nicht hermetisch verschließbar ist, wobei sie gleichzeitig den Grill (4) darin enthält.

14. Verfahren zum Garen mit einem Grill, mit einer Vorrichtung nach Anspruch 1, wobei eine Positionierung der Vorrichtung (1) auf der Seite mindestens eines Gasbrenners und eine Nutzung der dabei abgegebenen Wärmequelle vorgesehen ist, zum Garen der Speisen auf seinem Grill (4).

## Revendications

1. Dispositif (1) de cuisson d'aliments avec un gril (4), comprenant un gril (4), une structure amovible (2) qui supporte le gril (4), où la structure (2) comprend une paroi de fond (2A) et au moins une paroi latérale (8) qui délimite un volume interne (6) de la structure (2) et dans lequel une ouverture (20) est définie sur au moins une paroi latérale (8) afin de permettre l'apport de chaleur dans la structure (2), la chaleur étant émise depuis une source de chaleur externe (5) vers le dispositif (1) et le dispositif comprend un élément de liaison (7) entre la source de chaleur externe (5) et l'ouverture (20), dans lequel l'élément de liaison (7) est creux intérieurement et comprend une embouchure d'entrée (7A) adressable vers la source externe (5) et une sortie (7B) insérée dans l'ouverture (20).

2. Dispositif de cuisson (1) selon la revendication précédente, dans lequel la paroi latérale (8) se développe depuis la paroi de fond (2A) jusqu'à un bord libre (2C) dans lequel le gril (4) est agencé.

3. Dispositif de cuisson (1) selon les revendications 1 et 2, dans lequel l'ouverture (20) est définie sur la paroi latérale (8) dans une position verticale intermédiaire entre la paroi de fond (2A) et le gril (4).

4. Dispositif de cuisson (1) selon la revendication 1, dans lequel l'élément de liaison (7) a une forme incurvée, les embouchures (7A, 7B) étant disposées sur des plans mutuellement incidents.

5. Dispositif de cuisson (1) selon la revendication 1 dans lequel l'élément de liaison (7) forme une courbe à 90°, les embouchures (7A, 7B) étant disposées sur des plans mutuellement perpendiculaires.

6. Dispositif de cuisson (1) selon la revendication 1 qui comprend en outre un réservoir (9) de collecte des graisses évacuées, qui peut être positionné de manière amovible sur la paroi arrière (2A) dans une position inférieure par rapport à l'ouverture (20).

7. Dispositif de cuisson (1) selon la revendication 1, dans lequel la structure (2) est configurée pour:
a. recevoir, depuis la position latérale de la structure (2), la chaleur (C) émise par la source externe (5),
b. diffuser la chaleur (C) recueillie à l'intérieur de la structure (2), c'est-à-dire dans un volume interne (6) de celle-ci, et
c. transférer la chaleur (C) vers le haut et à travers le gril (4), avant de sortir par le haut.

8. Dispositif (1) selon la revendication 7, **caractérisé en ce que** l'opération de réception et de diffusion de la chaleur (C) est interceptée par au moins un élément de liaison (7) pouvant être relié à un côté (8) de la structure (2); l'élément de liaison (7), une fois relié à la structure (2), supportant une embouchure d'entrée tournée vers le bas et avec un axe sensiblement vertical (AA), tandis que l'entrée dans la structure (2) se conforme à un axe (BB) disposé sensiblement comme le gril (4).

9. Dispositif (1) selon les revendications 7 et 8, **caractérisé en ce que** la structure amovible (2) comporte un réservoir (9) de raccordement des graisses évacuées lors de la cuisson; le réservoir (9) étant situé dans une position basse par rapport à la liaison de l'élément de liaison (7) à la structure (2).

10. Dispositif (1) selon la revendication 9, **caractérisé en ce que** le réservoir de collecte (9) est amovible et peut être positionné sur le fond de la structure (2).

11. Dispositif (1) selon la revendication 1, **caractérisé en ce qu'**il comporte au moins deux poignées (10, 11) placées sur des côtés opposés; au moins une poignée (10, 11) est disposée du même côté que l'élément de liaison (7).

12. Dispositif (1) selon la revendication 11, **caractérisé en ce que** la poignée (10) du côté de l'élément de liaison (7) peut être reliée respectivement à l'élément de liaison (7) lui-même, d'un côté, et contre la paroi latérale de la structure (2), d'autre côté; et elle est donc disposée selon l'axe BB de l'élément de liaison (7).

13. Dispositif (1) selon l'une des revendications précédentes, **caractérisé en ce qu'**il peut être fermé de manière non hermétique par au moins un couvercle en forme de dôme (12) et avec une base coïncidant avec la forme de la structure (2), contenant en même temps le gril (4) à l'intérieur.

14. Procédé de cuisson au gril, avec un dispositif selon l'une quelconque des revendications précédentes, dans lequel un positionnement du dispositif (1) est prévu du côté d'au moins un brûleur à gaz et une utilisation de la source de chaleur émise dans ce cas, pour cuire les aliments posés sur son gril (4).
